# EUROPEAN PATENT SPECIFICATION

(11) **EP 4 093 190 B1**
(45) Date of publication and mention of the grant of the patent: **04.03.2026**
(21) Application number: 21744465.2
(22) Date of filing: 20.01.2021
(51) Int. Cl.: A01K 5/00, A01K 5/02, A23N 17/00, A23N 17/02

(54) **APPARATUS AND METHODS FOR PREPARING LIVESTOCK FEED**
VORRICHTUNG UND VERFAHREN ZUR HERSTELLUNG VON VIEHFUTTER
APPAREIL ET PROCÉDÉS DE PRÉPARATION D'ALIMENTS POUR BÉTAIL

(30) Priority: 21.01.2020 US 202062963993 P; 23.03.2020 US 202062993536 P
(43) Date of publication of application: 30.11.2022
(73) Proprietor: Glori Enterprises, LLC, Clear Lake, WI 54005 (US)
(72) Inventor: Friendshuh, Greg, Clear Lake, WI 54005 (US)
(74) Representative: Müller-Boré & Partner Patentanwälte PartG mbB
(86) International application number: PCT/US2021/014134
(87) International publication number: WO 2021/150575

(56) References cited:
- WO-A1-2016/126234
- WO-A1-2016/126234
- CN-A- 106 962 963
- US-A- 3 265 227
- US-A- 3 265 227
- US-A- 3 421 740
- US-A- 3 599 688
- US-A- 3 790 138
- US-A- 4 115 257
- US-A- 4 261 816
- US-A- 4 462 693
- US-A- 5 363 754

## Description

### FIELD

Inventive concepts relate generally to apparatus and methods for preparing feed for livestock, in particular dairy cattle and beef cattle.

### BACKGROUND

Generally speaking, livestock feed compositions provide animals with the protein, carbohydrates, fiber, vitamins, and minerals they require. Livestock feed compositions can be the primary source of food for the animals, or they can be designed to provide a supplement for animals that eat forage with the extra protein and energy they require to complete their diet.

The majority of feed consumed by cattle is typically forage. Generally, when an animal eats forage, it grazes on grass in a pasture or field, or eats some type of preserved forage such as hay, silage or haylage. Dietary supplements can provide cattle with additional minerals, vitamins, and other compounds they may require to meet specific needs. These supplements can be provided in loose form (which can be added to feed as desired), or block form (such as solid blocks that animals can lick).

Factors that can impact the type of feed cattle require include, but are not limited to, the type of cattle (for example, show cattle, dairy, or beef cattle), age of the cattle, reproductive stage, life stage, overall feeding program (such as pasture cattle), and pasture conditions.

Many dairy farmers work with nutritionists to create a feed ration (recipe) that is best suited for their cows. This ration is dependent upon where the farm is located and what feed types are most commonly available, among other variables. High quality feed is important for a cow's health and milk production.

Typically, dairy farmers aim for a ration consisting of about 50-60% forage. Forage consists of plants that are consumed mainly by grazing livestock, such as grass or hay. Dairy cattle are often supplemented with grain to increase the efficiency of production. For lactating cows, a high energy diet increases milk output, measured in pounds or kilograms of milk per head per day.

There are two groups of forages, namely, wet and dry. Exemplary wet forage is silage (fermented forage). Commonly, silage on a dairy farm can consist of barley, corn, or alfalfa. Dry forages are pasture (fresh forage) or high-quality alfalfa hay, alfalfa-grass mix hay, grass hay or straw. Feed can consist of silage, hay, straw, or a mix of two or more of these.

The remaining portion of the diet is referred to as the concentrate. The concentrate is composed of carbohydrates, proteins, fats, minerals, and vitamins.

Feed costs represent the largest annual operating cost for most commercial cow-calf enterprises. A major overall desire of dairy farmers and ranchers alike is to reduce the overall cost to produce a product, such as milk or beef, with an acceptable level of quality. The business of milk production has also become very competitive; profits are realized more readily when feed is utilized efficiently and when cows produce their maximum amount of milk.

Current methods of formulating feed rations on-site involve introducing baled straw into a chopper to comminute the straw, and mixing the comminuted straw with other components such as silage, protein, and other components of the concentrate (e.g., minerals and vitamins).

In recent years, corn silage has become a more prominent component of dairy cow diets. Corn silage provides a cost-effective source of nutrients. However, attention must be paid to harvesting and processing the corn silage to provide optimum results.

CN 106 962 963 A describes a fermented forage production system. The production system comprises a pulverizing device, a screening device, a stirring device, a material metering mechanism, a compression molding machine and a three-dimensional film-wrapping mechanism, all are arranged sequentially along the feeding direction. The three-dimensional film-wrapping mechanism comprises an axial film-wrapping mechanism and a circumferential film-wrapping mechanism. According to the fermented forage production system, materials are pulverized through the pulverizing device; the materials are screened through the screening device and impurities are removed, then raw materials are added through the stirring device and stirred, and fermented forage obtained by processing bacterial bag waste is manufactured into a column shape through the compression molding machine so as to facilitate the sale and transportation. Thin film is wrapped around the entire outer surface of the column-shaped fermented forage by means of the arrangement of the axial wrapping mechanism and the circumferential wrapping mechanism; and the manual operation is not required in the whole process and the whole process is time-saving and labor-saving. The column-shaped fermented forage is continuously wrapped with film, thereby saving the moved time, ensuring the good effect of wrapping the film, reducing the labor strength and labor cost. The fermented forage production system has the advantages of being reasonable in design, convenient to operate, high in using efficiency and improving the process efficiency and process effect of the bacterial bag waste.

### SUMMARY

The underlying technical problem is solved by the subject-matter having the features of the independent claims. Additional embodiments are defined in the dependent claims. Generally speaking, the present disclosure relates to apparatus and methods for preparing livestock feed, and in particular, feed for dairy cattle.

A livestock feed sorting assembly comprises a metering unit and a sorting unit, wherein the metering unit is configured to receive corn silage and transport the corn silage in a controlled manner toward the sorting unit. The sorting unit, in turn, acts to separate particles making up the silage composition into size fractions. These separated size fractions can be utilized to formulate livestock feed.

The metering unit can be provided as a hopper having a tapered configuration, such that the top, open end is larger and tapers downward to a lower, trough portion. In use, silage is introduced into the top, open end and moves downward (e.g., is urged downward) toward the trough portion. The trough portion, in turn, contains a conveyance device such as an auger, conveyor, or similar device that transports the silage in a controlled manner to the sorting unit. The conveyor can be configured as a roller chain or belt conveyor. The sorting unit can be provided as a screen material configured as a rotating drum, shaker deck, oscillating deck, or similar separating apparatus.

According to the invention, a livestock feed sorting assembly comprises:
(a) a hopper having an interior area that tapers downward to a trough, the interior area containing
   one or more rotating rods, and
   a conveyance device, being an auger or a conveyor, positioned within the trough, the conveyance device having a first end and a second end, and
(b) a rotating drum comprising a screen in cylindrical form, the rotating drum having an intake end and a retentate end,

wherein the conveyance device extends at an upward angle from the hopper toward the rotating drum
wherein the rotating rods and conveyance device cooperate to transport a silage material at a controlled rate to the intake end of the rotating drum, and
wherein the screen of the rotating drum separates silage material into fines and retentate.

In some implementations, the conveyance device comprises an auger positioned within the trough, the auger having a first end and a second, free end.

In some implementations, the conveyance device comprises a conveyor positioned within the trough, the conveyor having a first end and a second end. The conveyor can comprise any suitable conveyor apparatus, such as a belt conveyor or chain conveyor.

In further aspects not forming part of the invention, a livestock feed sorting assembly comprises:
(a) a hopper having an interior area that tapers downward to a trough, the interior area containing
   one or more rotating rods, and
   a conveyance device positioned within the trough, the conveyance device having a first end and a second end, and
(b) a shaker deck or oscillating deck comprising a screen, the shaker or oscillating deck having an intake end and a retentate end,

wherein the rotating rods and auger cooperate to transport a silage material at a controlled rate to the intake end of the shaker deck, and
wherein the screen of the shaker deck separates silage material into fines and retentate.

In some implementations, the conveyance device comprises an auger positioned within the trough, the auger having a first end and a second, free end.

In some implementations, the conveyance device comprises a conveyor positioned within the trough, the conveyor having a first end and a second end. The conveyor can comprise any suitable conveyor apparatus, such as a belt conveyor or chain conveyor.

The hopper can be provided with a fixed, adjustable angle of inclination. In this way, the end user can adjust and set the angle of inclination to thereby control the rate of transport of silage through the hopper and into the sorting unit.

In some implementations, the conveyance device of the hopper can extend from the hopper at an adjustable angle. In these aspects, the hopper can remain at a fixed position, and conveyance device can extend from the hopper toward the sorting unit. The angle of the conveyance device can be adjusted and set to provide a desired rate of transport of silage from the hopper and into the sorting unit.

The one or more rotating rods can include studs that project from the surface. The studs can assist in moving silage downward within the hopper, and toward the conveyance device. In some embodiments, the hopper includes two rotating rods. The rotating rods can be the same or different.

In some aspects, the conveyance device (auger or conveyor) is driven by a force applied to the first end.

Optional features of the rotating drum include the following. The drum can have a constant or variable diameter along its axis. The screen can have a uniform aperture size (diameter of an individual aperture), for example, an aperture size of 1,91 cm (i.e., 0.75 inches) throughout the screen. Alternatively, the screen can include apertures of different sizes within the same drum. The size of the apertures within the screen can vary depending upon such factors as the amount of retentate to capture, particle size in the parent material, desired range of fines particle size to be collected, and the like. The drum can be pitched at a fixed, adjustable downward angle from the intake end. In some aspects, the drum can be provided at a downward slope of about 10 degrees or less, or about 9 degrees or less, or about 8 degrees or less, or about 7 degrees or less, or in a range of about 1 degree to about 8 degrees, or about 2 degrees to about 8 degrees, or about 3 degrees to about 8 degrees, or about 6 degrees to about 8 degrees.

Likewise, when the sorting unit comprises a shaker deck or oscillating deck, the shaker or oscillating deck can be provided with a length, width, and depth suitable for containing and separating silage into desired size fractions. The screen can have a uniform aperture size, for example, an aperture size of 1,91 cm (i.e., 0.75 inches) throughout the screen. Alternatively, the screen can include apertures of different sizes within the same shaker deck. The size of the apertures within the screen can vary depending upon such factors as the amount of retentate to capture, particle size in the parent material, desired range of fines particle size to be collected and the like. The shaker deck can be pitched at a fixed, adjustable downward angle from the intake end. The shaker deck can use gyratory vibration to separate materials by size, and, in some aspects, can be set to a shallow angle relative to the horizontal level plane, typically no more than 2 to 5 degrees relative to the horizontal plane.

In some implementations, the livestock feed sorting assembly can be assembled on a moveable platform, such as a trailer that can be pulled by a vehicle. In these aspects, inventive concepts provide a mobile livestock feed sorting assembly that can be transported to a desired location and utilized to prepare a livestock feed ration. Beneficial features include improved efficiency and reduced cost, since silage materials can be processed on site, without the requirement that they be moved to a separate processing location.

Also contemplated are methods of preparing a livestock feed ration, the method comprising steps of:
(a) providing a silage material to a livestock feed sorting assembly comprising:
   a hopper comprising an interior area that tapers downward to a trough, the interior area containing
      one or more rotating rods, and
      a conveyance device, being an auger or a conveyor, positioned within the trough, the conveyance device having a first end and a second end
   a rotating drum comprising a screen in cylindrical form, the rotating drum having
   an intake end and a retentate end,

   wherein the rotating rods and auger cooperate to transport a silage material at a controlled rate to the intake end of the rotating drum, and
   wherein the screen of the rotating drum separates silage material into fines and retentate;
(b) combining the fines into a ration for lactating cows, and
(c) combining the retentate with concentrate to produce a dry cow ration. Optionally, step (c) can comprise combining the retentate with concentrate to produce a ration suitable for young stock.

In some implementations, the conveyance device comprises an auger positioned within the trough, the auger having a first end and a second, free end.

In some implementations, the conveyance device comprises a conveyor positioned within the trough, the conveyor having a first end and a second end. The conveyor can comprise any suitable conveyor apparatus, such as a belt conveyor or chain conveyor.

The hopper can be provided with a fixed, adjustable angle of inclination. In this way, the end user can adjust and set the angle of inclination to thereby control the rate of transport of silage through the hopper and into the sorting unit.

In some implementations, the conveyance device of the hopper can extend from the hopper at an adjustable angle. In these aspects, the hopper can remain at a fixed position, and conveyance device can extend from the hopper toward the sorting unit. The angle of the conveyance device can be adjusted and set to provide a desired rate of transport of silage from the hopper and into the sorting unit.

The one or more rotating rods can include studs that project from the surface. The studs can assist in moving silage downward within the hopper, and toward the conveyance device. In some embodiments, the hopper includes two rotating rods. The rotating rods can be the same or different.

In some aspects, the conveyance device (auger or conveyor) is driven by a force applied to the first end.

In some embodiments, a shaker deck or oscillating deck can be used in substitution for the rotating drum.

Features of inventive methods can include the following. The fines can be combined with corn silage, protein canola, alfalfa, whey permeate, vitamins and minerals to prepare a ration for lactating cows. The retentate can be combined with corn silage, protein canola, alfalfa, whey permeate, vitamins and minerals, to prepare a ration for dry cows and/or young stock.

Animal feed compositions prepared using inventive methods can maintain the palatability and digestibility of the feed, while providing desired nutritional benefits to the animal, as well as significantly reduced cost. Other advantages will be apparent upon review of this disclosure.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### BRIEF DESCRIPTION OF THE DRAWINGS

The disclosure may be more completely understood in consideration of the following detailed description of various embodiments of the disclosure in connection with the accompanying drawings, in which:
**FIG. 1** is a schematic diagram of a sorting assembly in accordance with an embodiment of the invention, from a top view;
**FIG. 2** is a schematic diagram of a cross-sectional side view of the embodiment shown in FIG. 1;
**FIG. 3** is a schematic diagram of an end view of the embodiment shown in FIG. 1;
**FIGS. 4A-4C** are schematic diagrams of a sorting assembly in accordance with an embodiment of the invention, from a partial side view (4A), side view (4B) and top view (4C);
**FIGS. 5A-C** are schematic diagrams of a sorting assembly in accordance with an embodiment of the invention, from a partial side view (5A), side view (5B) and top view (5C);
**FIGS. 6A-C** are schematic diagrams of a sorting assembly in accordance with an embodiment of the invention, from a partial side view (6A), side view (6B) and top view (6C); and
**FIG. 7** is a schematic diagram of a sorting assembly in accordance with an embodiment of the invention.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

Generally, when referring to the assemblies and methods herein, reference will be made to feed compositions for dairy cattle. In particular, processing of corn silage through a sorting assembly for use in dairy cow rations will be discussed in detail. Corn silage is a popular forage for ruminant animals because it is high in energy and digestibility and is easily adapted to mechanization from the stand-crop to time of feeding.

Such feed compositions for dairy cattle will be utilized to describe inventive concepts, as these applications are useful to highlight features and advantages. However, it will be understood upon review of the present specification that inventive feed sorting assemblies can be adapted for additional uses outside these described illustrative applications.

Inventive concepts provide apparatus and methods of preparing rations for dairy cows and young stock that meet the cows' nutritional needs while maintaining health, and, in lactating cows, optimizing milk production, milk fat and milk protein. Advantageously, inventive concepts provide cost-effective methods to achieve these goals.

Corn silage provides a cost-effective and nutrient dense component for dairy cow rations. However, the corn silage should be properly processed to provide such benefits. When silage is finely comminuted, such small particulate allows good packing density in storage and reduces feed sorting on-site. However, this smaller particle size means that the material will not stay in the rumen long; in these cases, having enough effective fiber to create an adequate rumen mat is important for proper ruminal digestion.

Grain particle size, chop length, and rip and tear of corn plant fibers are factors to consider in order to provide more effective fiber and more digestibility of neutral detergent fiber (NDF). Inventive apparatus and methods herein can be adapted to exploit these factors to achieve beneficial livestock feed rations.

Inventive systems and methods provide ways to take advantage of the corn grain in silage, and enhance feed rations for dairy cows. In illustrative embodiments, corn silage is provided to a sorting assembly that efficiently separates fines from coarse fodder. The fines, a high energy source, can then be formulated with other components to produce a ration for lactating cows. Separately, coarse fodder (retentate) can be combined with corn silage, protein, and other concentrate components to prepare a ration suitable for dry cows and/or young stock. Inventive methods and systems thus provide flexible, enhanced feed rations that can be customized for different populations of dairy cattle.

A livestock feed sorting assembly that is particularly useful for separation of corn silage will now be described with more specificity.

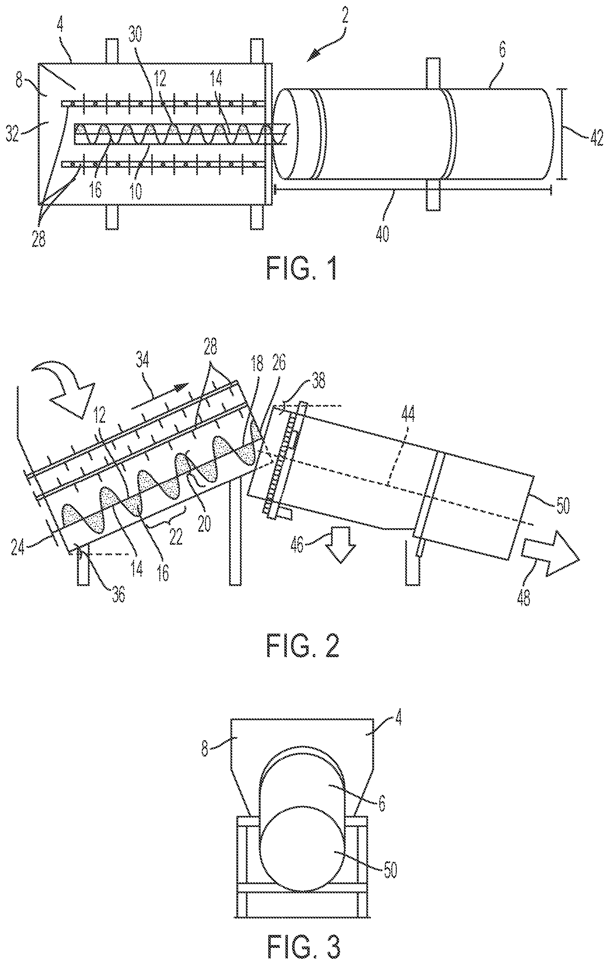

Referring to FIG. 1, a livestock feed sorting assembly 2 is shown which generally includes a metering unit (hopper 4) and sorting unit, which is illustrated as drum 6. Hopper 4 is configured to receive corn silage through a top, open face. Within hopper 4 are included an auger 12 and one or more studded rods 28, which together operate to receive corn silage and transport the corn silage in a metered manner toward the drum 6.

The overall configuration of hopper 4 is a container having an upper portion 8 that tapers downward to a trough portion 10 that has smaller dimensions. Upper portion 8 thus defines an intake area 32 that functions to receive corn silage and move that silage downward toward studded rods 28 and auger 12.

Looking more specifically at the interior components of hopper 4 shown in FIGS. 1 and 2, auger 12 is composed of a rotating shaft 14 and continuous helical blade 16. Auger 12 includes an axis 18 that runs along the rotating shaft 14, a diameter 20 and pitch 22. The pitch 22 is equal to the height of one complete helix turn, measured parallel to the axis 18 of the helix.

The embodiment illustrated in FIG. 1 includes two studded rods 28 that each include projections 30 which emanate from the rod and protrude perpendicular to the rod 28. As shown, projections 30 can be positioned at spaced, alternating locations along and around the studded rod 28. Alternative configurations can include projections that protrude at an angle other than 90 degrees, and/or varying the space and/or relative location between individual projections 30. In some embodiments, projections 30 can be provided with uniform dimensions (e.g., diameter and length), so that all projections 30 along a length of studded rod are the same. Alternatively, projections 30 can be provided with varying dimensions (e.g., diameter and/or length), along a length of studded rod, as desired.

FIG. 1 illustrates two studded rods 28. It will be readily appreciated that any number of studded rods 28 can be used within a particular hopper, including a single studded rod 28, or more than two studded rods 28. The number and position of the studded rods within the hopper 4 can be selected based upon such factors as the dimensions of the hopper 4, the type of silage to be processed, the desired processing rate, and the like. For example, in some embodiments, studded rods 28 can be positioned within the upper portion 8 and toward the top face of hopper 4. Alternatively, studded rods 28 can be positioned closer to trough portion 10 of hopper 8. In some aspects, hopper 4 can include one studded rod 28, or two studded rods, or three studded rods, or four studded rods, or five or more studded rods, as desired.

In operation, corn silage is introduced into the top of hopper 4 at the intake area 32. Studded rod(s) 28 rotate to urge the corn silage downward within hopper 4, where auger 12 is located within trough portion 10. The speed with which studded rods 28 rotate can be selected based upon such factors as the type of material being processed, particle size of the material, processing speeds, dimensions of the hopper 4, and the like.

Hopper 4 is provided in a tapered configuration, such that the interior area decreases downward. As illustrated in FIGS. 1 and 2, the overall shape of hopper 4 tapers from a largest dimension at the top surface, to a smallest dimension at the bottom surface. At the bottom surface, a trough portion 10 is configured to surround auger 12 to allow for transport of corn silage toward the drum. Dimensions of trough portion 10 are selected to complement auger 12 contained within it. Thus, trough portion 10 will typically be provided in a size that is slightly larger than the diameter of the auger, to allow the auger to freely rotate therein and move silage therethrough. In use, auger 12 operates as a screw conveyor to move corn silage in a transport direction 34. Auger 12 includes a first, driven end 24 and second, free end 26. The rate of volume transfer in transport direction 34 is proportional to the rotation rate of the auger shaft 14. The rotation rate can be varied to deliver a metered rate of corn silage in transport direction 34, to drum 6.

As illustrated in FIG. 2, by virtue of the tapered shape and inclined positioning of hopper 4, the assembly includes an upper intake area for corn silage. In use, corn silage is introduced into hopper at this intake area (as shown by the large arrow), is moved in a downward direction by studded rods 28, whereby it contacts auger 12 and is moved in a transport direction 34 toward drum 6.

As illustrated in FIG. 2, hopper 4 is provided at an incline, with an angle of inclination 36. Angle of inclination 36 is a fixed, adjustable angle selected to meter the silage at a desired rate to drum 6. Thus, an end user can select the desired angle of inclination and set the hopper to that angle for operation.

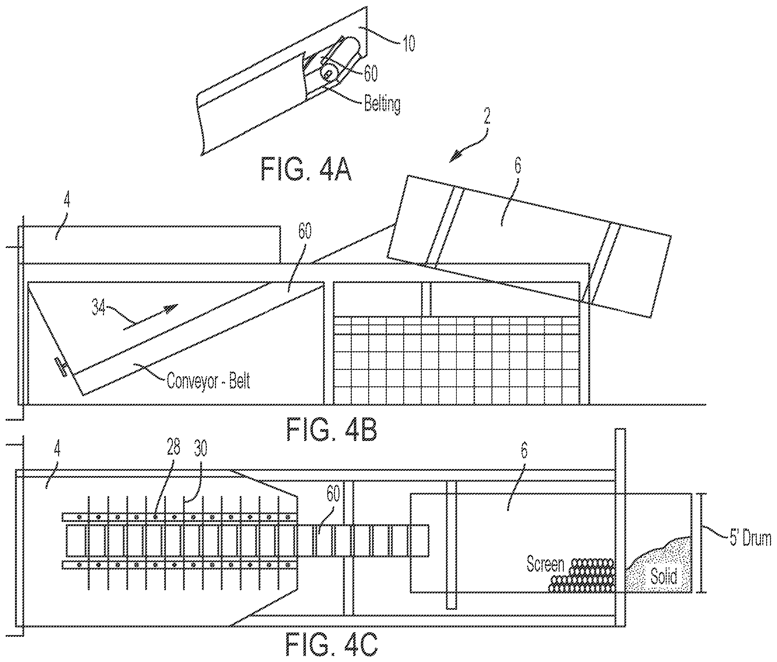

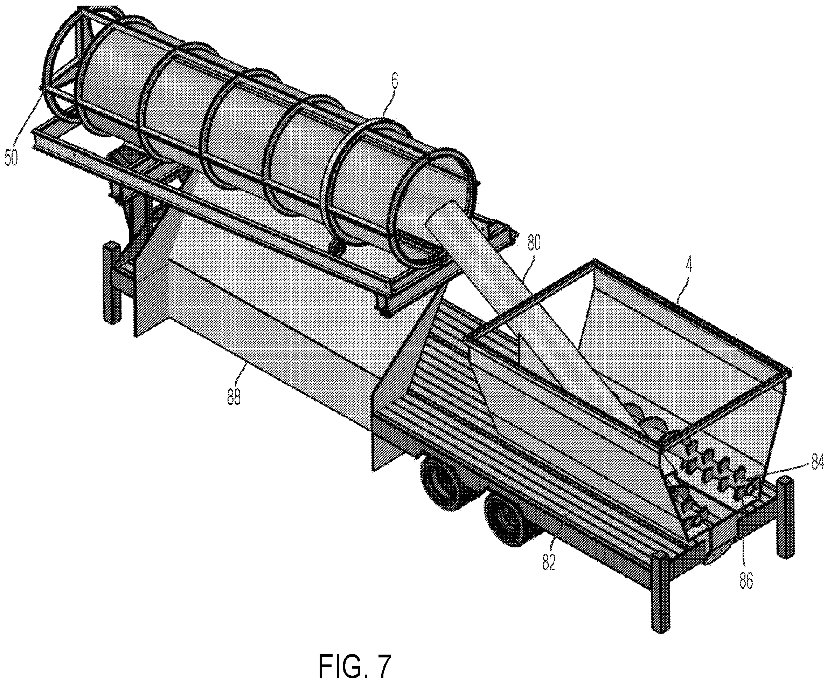

While FIG. 2 illustrates hopper 4 set at an incline, alternative embodiments do not require the hopper to be set at an angle of inclination. In some aspects, the conveyance device (e.g., the auger of FIGS. 1 and 2, or the conveyor of FIGS. 4-6) can extend outward from the hopper 4 and itself be provided at an angle of inclination. In these aspects, the hopper 4 is not inclined; the angle of inclination from the metering unit to the sorting unit is provided by the conveyance device itself. One illustration of these aspects is shown in FIG. 7, wherein conveyance device 80 extends upward from hopper 4 toward drum 6.

Once the silage has been transported along transport direction 34 to the free end 26 of auger 12, it passes into drum 6. Drum 6 consists of a rolled cylinder of screen having apertures (openings), a length 40 and a diameter 42. The screen can include apertures of a uniform size (all apertures of the screen are the same size, or substantially the same size), or the screen can be composed of apertures that vary in size. In some aspects, the size of the apertures within the screen can be selected depending upon such factors as the amount of retentate to be captured, particle size in the parent material, operating speeds, and the like. It will be appreciated that all dimensions of the components comprising livestock feed sorting assembly 2 can be manipulated depending upon the application of the device.

Drum 6 rotates about an axis 44. The rate of rotation about axis 44 can be adjusted based upon such factors as particle size of material to be processed, desired rate of production, angle at which the drum is positioned, screen aperture size, and the like. Drum 6 acts to separate particles making up the silage composition into size fractions. In use, materials larger than aperture size are trapped above the screen, while particles smaller than the apertures can pass through the screen. The silage composition is thus divided into size fractions comprising fines (smaller particles that pass through the screen) and retentate (larger particles).

Drum 6 is pitched at an angle 38, so that material travelling through the drum is transported by rotation of the drum 6 and gravity. As the material travels through drum 6, smaller particles pass through the screen at 46 and are collected in a collector (not shown). Larger particles (also referred to as retentate) continue through drum 6 and exit the drum 6 at end 50 as shown by arrow 48 to a collector (not shown).

The screen can be provided with any desired aperture diameter to separate the silage by particle size. An illustrative screen size is in a range of about 1.27 cm to 2.54 cm (i.e., about 0.5 inches to about 1 inch), or about 1.52 cm to about 2.28 cm (i.e., about 0.6 inches to about 0.9 inches), or about 1,78 cm to about 2,03 cm (i.e., about 0.7 inches to about 0.8 inches), such that particles with a size less than the aperture size pass through the screen at 46 and are separated from retentate, which exits drum 6 at the output end 50 shown at arrow 48 to a retentate collector.

Illustrative screen drums can be purchased, for example, from W.S. Tyler, Mentor, Ohio. Drums can be fabricated from metal, such as steel, stainless steel alloys, titanium, Hastelloy, silver, non-ferrous metals, aluminum, phosphor bronze, brass, copper, nickel, Monel, or the like. The fabrication material can be selected based upon such factors as environmental conditions of use (e.g., to avoid corrosion or failure of the part), durability, cost, and dimensional requirements of the drum.

FIG. 3 illustrates an end view of the livestock feed assembly depicted in FIGS. 1 and 2, shown from the output end 50. The downward pitch of drum 6 from its intake end adjacent to hopper 4, to output end 50 is shown.

FIGS. 4A-4C illustrate an alternative embodiment of livestock feed sorting assembly 2, in which the conveyance device comprises a conveyor belt 60 (e.g., auger 12 shown in FIGS. 1-2 is replaced by conveyor belt 60). FIGS. 4A-4C illustrate livestock feed sorting assembly 2 which generally includes a hopper 4 and drum 6. Hopper 4 is configured to receive corn silage through a top, open face. Within hopper 4 are included a conveyor belt 60 and one or more studded rods 28, which together operate to receive corn silage and transport the corn silage in a metered manner toward the drum 6.

FIG. 4A shows a partial cross-sectional view of conveyor belt 60 within the trough portion 10 of hopper 4, FIG. 4B illustrates a side view of the conveyor belt 60 within hopper 4, and FIG. 4C shows a top view of the livestock feed sorting assembly 2, showing studded rods 28 and conveyor belt 60.

As illustrated in FIGS. 4A-4C, hopper 4 and drum 6 can be spaced apart a desired distance, so that conveyance device 60 extends from the hopper 4, bridges the space between hopper 4 and drum 6, and delivers material to the drum 6. The spacing between the metering unit (e.g., hopper 4) and sorting unit (e.g., drum 6) can be selected based upon such factors as application of the device, transportation considerations (when the apparatus is provided as a mobile unit), overall space or storage considerations, and the like. In some aspects, when the metering unit is spaced apart from the sorting unit, the conveyance device can be enclosed (e.g., surrounded by a casing such as a tube or shaft) to reduce the possible loss of material during transport to the sorting unit.

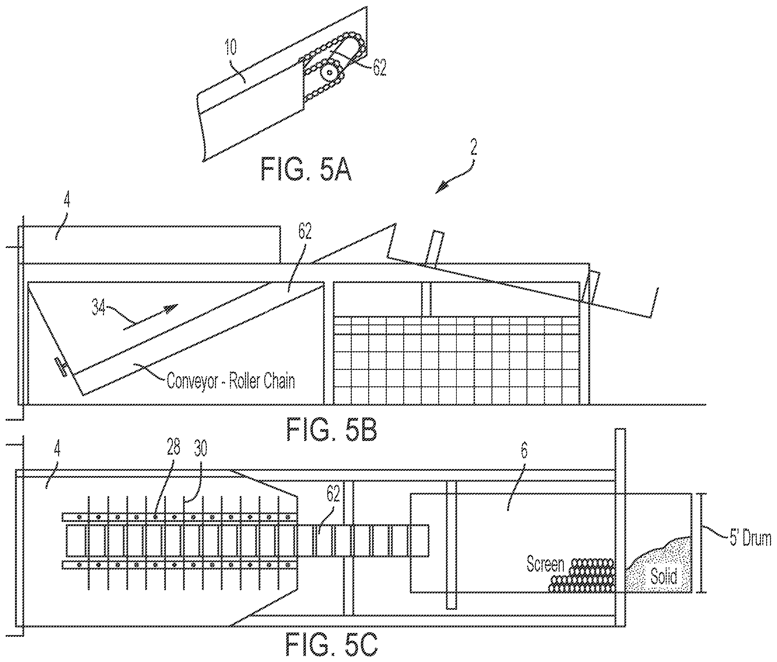

FIGS. 5A-5C illustrate an alternative embodiment of livestock feed sorting assembly 2, in which the conveyance device is provided by conveyor belt 62. FIGS. 5A-5C illustrate livestock feed sorting assembly 2 which generally includes a hopper 4 and drum 6. Within hopper 4 are included a conveyor belt 62 and one or more studded rods 28, which together operate to receive corn silage and transport the corn silage in a metered manner toward the drum 6. The conveyor belt 62 is provided in the form of a roller chain belt.

FIG. 5A shows a partial cross-sectional view of conveyor belt 62 within the trough portion 10 of hopper 4, FIG. 5B illustrates a side view of the conveyor belt 62 within hopper 4, and FIG. 5C shows a top view of the livestock feed sorting assembly 2, showing studded rods 28 and conveyor belt 62.

Dimensions of trough portion 10 are selected to complement conveyor belt 60 or 62 contained within it. Thus, trough portion 10 will typically be provided in a size that is approximate to the diameter of the conveyor belt, to allow the conveyor belt to freely travel therein and move silage in a transport direction 34, while retaining the silage on the conveyor belt until it reaches the sorting unit. Trough portion 10 and conveyor belt 60 or 62 are thus configured to minimize gaps that could allow silage to fall off the conveyor belt, which could reduce processing efficiency and/or clog the equipment. The speed of conveyor 60 or 62 can be varied to control the rate of delivery of silage to the sorting unit (here, drum 6).

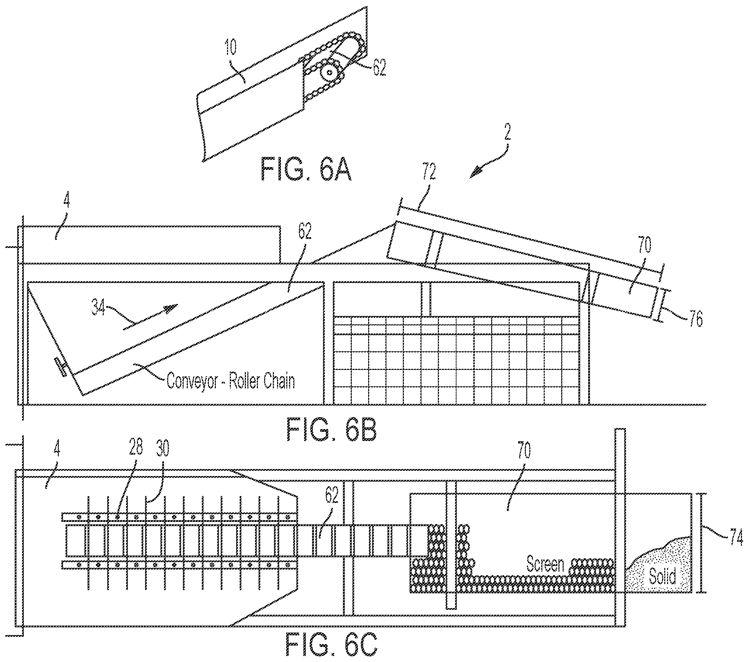

FIGS. 6A-6C illustrate an alternative embodiment of a sorting unit of livestock feed assembly 2. In this embodiment, drum 6 can be replaced by a shaker deck 70. Shaker deck 70 consists of a screen having apertures (openings), a length 72, width 74, and depth 76. The screen can include apertures of a uniform size (all apertures of the screen are the same size, or substantially the same size), or the screen can be composed of apertures that vary in size. In some aspects, the size of the apertures within the screen can vary depending upon such factors as the amount of retentate to be captured, particle size in the parent material, and the like.

In some aspects, shaker deck 70 uses gyratory vibration to separate materials by size. In these aspects, shaker deck 70 is moved in a reciprocating side to side motion at near level plane at low angles. The shaker deck can be set to a shallow angle relative to the horizontal level plane, typically no more than 2 to 5 degrees relative to the horizontal plane. The shaker deck thus travels in an orbital path. In one embodiment, the shaker deck 70 is moved in a reciprocating side to side direction for a distance of about 10.16 cm (i.e., about four (4) inches). The rate of movement, as well as dimensions of reciprocating movement, can be adjusted based upon such factors as particle size of material to be processed, desired rate of production, depth 76 of the shaker deck, angle at which the shaker deck is positioned, screen aperture size, and the like. Shaker deck 70 acts to separate particles making up the silage composition into size fractions. In use, material rolls over the screen and falls through the screen apertures with the induction of gravity and directional shifts. In some aspects, the sorting unit can comprise an oscillating deck.

Optionally, rubber balls and trays can provide an additional mechanical means to cause the material to fall through the screen. The balls can also provide a throwing action for the material to find an opening to fall through. Material larger than aperture size is trapped above the screen, while particles smaller than the apertures can pass through the screen. The silage composition is thus divided into size fractions comprising fines (smaller particles that pass through the screen) and retentate (larger particles).

As the material travels across shaker deck 70, smaller particles pass through the screen and are collected in a collector (not shown). Larger particles (also referred to as retentate) continue across shaker deck 70 and exit the shaker deck at a desired point, to a collector (not shown).

The screen can be provided with any desired aperture diameter to separate the silage by particle size. An illustrative aperture size is in a range of about 1.27 cm to about 2.54 cm (i.e., about 0.5 inches to about 1 inch), or about 1.52 cm to about 2.29 cm (i.e., about 0.6 inches to about 0.9 inches), or about 1.78 cm to about 2.03 cm (i.e., about 0.7 inches to about 0.8 inches), such that particles with a size less than the aperture size pass through the screen and are separated from retentate, which exits shaker deck 70 at an output end.

Illustrative shaker decks can be purchased, for example, from BM&M Screening Solutions, Ltd., Surrey, BC, Canada, and Rotex, Cincinnati, Ohio. Shaker screens can be fabricated from metal, such as steel, stainless steel alloys, titanium, Hastelloy, silver, non-ferrous metals, aluminum, phosphor bronze, brass, copper, nickel, Monel, or the like. The fabrication material can be selected based upon such factors as environmental conditions of use (e.g., to avoid corrosion or failure of the part), durability, cost, and dimensional requirements of the shaker deck.

Similar to the embodiment illustrated in FIG. 1, the number of studded rods 28 within the hopper 6 illustrated in FIGS. 4-6 can be varied as desired, and the number, position, spacing and angle of protrusion of the individual projections can be manipulated as desired.

FIG. 7 illustrates inventive concepts wherein the livestock feed sorting assembly 2 is provided as a mobile unit. In this aspect, the livestock feed sorting assembly 2 can be provided on the bed of a moveable trailer, so that it can be delivered to a desired location (for example, a source of silage) to prepare a livestock feed ration. As shown, livestock feed sorting assembly 2 includes hopper 4 provided flush on the surface of the trailer 82 and conveyance device 80 extending at an upward angle out of hopper 4 toward drum 6. FIG. 7 illustrates hopper 4 without some of the sidewalls so that the interior of hopper 4 can be shown. Hopper 4 includes studded rods 84 having projections 86 that emanate from the rod and protrude perpendicular to the rods 84.

As shown, projections 86 can be positioned at spaced, alternating locations along and around the studded rod 84. Alternative configurations can include projections that protrude at an angle other than 90 degrees, and/or varying the space and/or relative location between individual projections 86. In some embodiments, projections 86 can be provided with uniform dimensions (e.g., diameter and length), so that all projections 86 along a length of studded rod are the same. Alternatively, projections 86 can be provided with varying dimensions (e.g., diameter and/or length), along a length of studded rod, as desired. In some aspects, some or all of the rods 84 can comprise an auger. For example, a portion of a rod 84 can be provided as an auger (i.e., the projection is configured as a continuous spiral around the rod), and another portion of the rod 84 can provide projections 86 in the configurations described elsewhere herein.

In the embodiment shown in FIG. 7, drum 6 is provided at a higher position relative to hopper 4. In some aspects, the metering unit (hopper 4) can be provided at a fixed position on the trailer, and the sorting unit (drum 6) can be adjustable. For example, drum 6 can be provided at a lower, collapsed position relative to the trailer 82 when the unit is not in use (e.g., horizontal to the surface of trailer 82). When the unit is to be used to prepare a livestock feed ration, drum 6 can be raised vertically to an operating configuration. In this operating configuration, drum 6 is provided at an angle, for example, 10 degrees or less, or 9 degrees or less, or 8 degrees or less, or 7 degrees or less, relative to horizontal. The drum 6 is thus provided at a position wherein its highest end is the end that receives silage material from the metering unit, and its lowest end is its output end 50. In this manner, the drum 6 can utilize both rotational movement and gravity to separate fines and retentate in accordance with inventive principals.

As shown in FIG. 7, a panel 88 can be provided beneath drum 6. When included, panel 88 can provide guidance for fines as they exit drum 6 during the sorting process. In some aspects, panel 88 can provide additional support to drum 6. This optional feature can thus reduce potential loss of fines and increase efficiency of collection.

Other optional features can include one or more of the following. Drum 6 can include internal fins that protrude from the drum surface toward its interior. These internal fins can be of sufficient dimensions to agitate (e.g., turn or throw) silage as it rotates within the drum. In this manner, the internal fins can increase processing efficiency of the livestock feed sorting assembly. In some aspects, a fan can be included in the livestock feed sorting assembly to blow air through the sorting unit.

The livestock feed sorting assembly 2 can be used to formulate dairy cow rations in a manner that provides an enhanced feed ration, as well as a cost-effective solution to formulating feed. Generally speaking, feed compositions in accordance with inventive concepts include carbohydrates, fiber, and fat. Other additives can include, for example, amino acids, vitamins, minerals, nutraceuticals, pharmaceuticals, and the like. These components will now be described in more detail.

Illustrative primary sources of carbohydrates for livestock feed in accordance with inventive concepts include corn, barley, oats, wheat, sorghum, molasses, beet pulp, and soyhulls. Many dairy farmers grown their own barley, corn, oats, and wheat and will often process these grains to be fed to the cattle. Exemplary corn products include corn silage, corn grain, corn gluten feed, corn germ meal, corn starch, and corn byproducts. Illustrative barley components include barley grain, barley silage, barley byproducts, and the like. Exemplary oat components include oat grain, oat silage, oat byproducts, and the like. Illustrative sorghum components include sorghum grain, sorghum silage, sorghum byproducts and the like. Exemplary wheat components include wheat grain, wheat silage, wheat bran, red dog wheat, wheat germ, wheat flour, wheat middlings, wheat byproducts and the like.

Molasses, beet pulp and soyhulls can be purchased from a feed mill. Depending upon the nutritional requirements of the cows, a farmer can select one or more of these carbohydrate sources to complement the forage.

Other carbohydrates include isolated dry or wet milled starch, bakery byproducts, hominy feed, peas, brewers' grains, distillers' grains, malt sprouts, rice, rice bran, rice flour, other rice byproducts, cereal feed, and tubers such as potatoes, yams, sweet potatoes, cassava (tapioca) and arrow root.

Combinations of any two or more of these carbohydrates may be used, as desired.

The amount of carbohydrate in the ration can be in a range of about 2 weight percent (wt.-%) to about 40 wt.-%.

Fiber in the form of neutral detergent fiber (NDF) can be included in the ration in an amount in the range of about 50 wt.-% to about 24 wt.-%. Other suitable fiber includes crude fiber, and acid detergent fiber (ADF).

Exemplary primary sources of protein include protein canola, canola meal, distillers' grains, soybean meal, corn gluten meal, and cottonseed meal.

Other proteinaceous sources include other oil seed meals such as palm meal; animal byproduct meals such as meat meal, poultry meal, blood meal, feather meal and fishmeal; plant byproduct meals such as wheat middlings, soybean hulls and corn by-products; and microbial protein such as torula yeast and brew's yeast.

The amount of protein content in the ration can vary. Generally, the protein content in the ration is in a range of about 12 wt.-% to about 19 wt.-%.

Feed compositions can also include added fat. Added fat can be used to support intake, rumen development, digestion, and optimal growth. "Added fat" includes edible mono-, di- and triglycerides of fatty acids and free fatty acids that are not inherently present in the starch source, protein source or any other nonfat source present in the feed composition. Added fat includes both animal fat (such as tallow, beef tallow, choice white grease, yellow grease, and the like), as well as plant oils.

Illustrative primary added fat sources include vegetable oil (such as soybean oil), palm oil, cottonseed oil, sunflower oil, tallow, fish oil, and protected fatty acids. Other suitable fats include those that contain palmitic acid (such as palm stearin), stearic acid, lauric acid, myristic acid, coco butter and any hydrogenated fat or oil.

Optionally, one or more minerals and vitamins can be included in inventive livestock feed rations. These nutrients can be balanced depending upon the needs of the cows. Exemplary primary sources include calcium, phosphorus, magnesium, sodium, chloride, potassium, sulfur, iron, zinc, manganese, copper, cobalt, iodine, selenium, vitamin A, D, E, and some B-vitamins. In some embodiments, prebiotics and/or probiotics can be used to aid in digestion and support the health of the cows.

Other optional additives include flavorings, coloring and dye ingredients, nutraceuticals and pharmaceuticals, and processing aids. Illustrative processing aids include talc and calcium carbonate. Illustrative flavorings include amino acids, molasses, and the like.

Feed compositions in accordance with inventive concepts can be provided as daily feed ration for a variety of livestock animals. The livestock animals can include domesticated animals such as dairy cows, beef cattle, sheep, goats, deer, horses, and the like. Inventive livestock feed sorting assemblies and methods can also be used to provide feed compositions for zoo animals.

In some aspects, inventive concepts provide methods of preparing a livestock feed ration, the method comprising steps of:
(a) providing a silage material to a livestock feed sorting assembly that comprises
   (1) a hopper comprising an interior area that tapers downward to a trough, the interior area containing one or more rotating rods, and a conveyance device positioned within the trough, the conveyance device having a first end and a second end, and
   (2) a rotating drum comprising a screen in cylindrical form, the rotating drum having an intake end and a retentate end,

   wherein the rotating rods and conveyance device cooperate to transport a silage material at a controlled rate to the intake end of the rotating drum, and
   wherein the screen of the rotating drum separates silage material into fines and retentate;
(b) combining the fines into a ration for lactating cows, and
(c) combining the retentate with concentrate to produce a dry cow feed and/or a young stock ration.

In some implementations, the conveyance device comprises an auger positioned within the trough, the auger having a first end and a second, free end.

In some implementations, the conveyance device comprises a conveyor positioned within the trough, the conveyor having a first end and a second end. The conveyor can comprise any suitable conveyor apparatus, such as a belt conveyor or chain conveyor.

In some embodiments, the separated fines are combined with one or more of alfalfa, corn silage, corn protein, minerals, vitamins, and whey permeate to prepare a ration for lactating cows.

In some aspects, the retentate is combined with concentrate to produce a dry cow ration and/or a young stock ration. An illustrative concentrate comprises corn silage, coarse fodder, protein canola, whey permeate and minerals. Other additives can be provided as desired.

All scientific and technical terms used herein have meanings commonly used in the art unless otherwise specified. The definitions provided herein are to facilitate understanding of certain terms used frequently herein.

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful.

The term "comprises" and variations thereof do not have a limiting meaning where these terms appear in the description and claims.

As used in this specification and the appended claims, the term "or" is generally employed in its sense including "and/or" unless the content clearly dictates otherwise.

"Include," "including," or like terms means encompassing but not limited to, that is, including and not exclusive.

The foregoing detailed description and examples have been given for clarity of understanding only. No unnecessary limitations are to be understood therefrom. The disclosure is not limited to the exact details shown and described, for variations obvious to one skilled in the art will be included within the disclosure defined by the claims.

Unless otherwise indicated, all numbers expressing quantities of components and so forth used in the specification and claims are to be understood as being modified in all instances by the term "about." Accordingly, unless otherwise indicated to the contrary, the numerical parameters set forth in the specification and claims are approximations that may vary depending upon the desired properties sought to be obtained by the present disclosure. At the very least, each numerical parameter should at least be construed in light of the number of reported significant digits and by applying ordinary rounding techniques.

Notwithstanding that the numerical ranges and parameters setting forth the broad scope of the disclosure are approximations, the numerical values set forth in the specific examples are reported as precisely as possible. All numerical values, however, inherently contain a range necessarily resulting from the standard deviation found in their respective testing measurements.

## Claims

1. A livestock feed sorting assembly (2) comprising:
(a) a hopper (4) comprising an interior area that tapers downward to a trough (10), the interior area containing
one or more rotating rods (28), and
an auger (12) positioned within the trough (10), the auger (12) having a first end (24), and a second, free end (26), and
(b) a rotating drum (6) comprising a screen in cylindrical form, the rotating drum (6) having an intake end and a retentate end (50),
wherein the auger (12) extends at an upward angle from the hopper (4) toward the rotating drum (6),
wherein the rotating rods (28) and auger (12) cooperate to transport a silage material at a controlled rate to the intake end of the rotating drum (6), and
wherein the screen of the rotating drum (6) separates silage material into fines and retentate.

2. The livestock feed sorting assembly of claim 1 wherein the auger (12) extends from the first end (24) within the trough (10) at an upward angle to a location within the intake end of the rotating drum (6).

3. A livestock feed sorting assembly (2) comprising:
(a) a hopper (4) comprising an interior area that tapers downward to a trough (10), the interior area containing
one or more rotating rods (28, 84), and
a conveyor (60, 62) positioned within the trough (10), the conveyor having (60, 62) a first end, and a second end, and
(b) a rotating drum (6) comprising a screen in cylindrical form, the rotating drum (6) having an intake end and a retentate end (50),
wherein the conveyor (60, 62) extends at an upward angle from the hopper (4) toward the rotating drum (6),
wherein the rotating rods (28, 84) and conveyor (60, 62) cooperate to transport a silage material at a controlled rate to the intake end of the rotating drum (6), and
wherein the screen of the rotating drum (6) separates silage material into fines and retentate.

4. The livestock feed sorting assembly of claim 3 wherein the conveyor (60, 62) extends from the first end within the trough (10) at an upward angle to a location within the intake end of the rotating drum (6).

5. The livestock feed sorting assembly of any one of claims 1 to 4 wherein the hopper (4) is provided with a fixed, adjustable angle of inclination.

6. The livestock feed sorting assembly of any one of claims 1 to 4 wherein the one or more rotating rods (28, 84) comprise a surface, and wherein studs project from the surface,
wherein, optionally, the hopper (4) comprises two rotating rods (28, 84).

7. The livestock feed sorting assembly of any one of claims 1 to 4 wherein the rotating drum (6) has a constant diameter along its axis.

8. The livestock feed sorting assembly of claim 1 or claim 2 wherein the screen comprises uniform aperture sizes,
wherein, optionally, the screen has an aperture size in a range of 1.27 cm to 2.54 cm (i.e., 0.5 inches to 1 inch).

9. The livestock feed sorting assembly of any one of claims 1 to 4 wherein the drum (6) is pitched at a fixed, adjustable downward angle from the intake end.

10. The livestock feed sorting assembly of any one of claims 1 to 4 comprising a mobile unit that is provided on a trailer (82).

11. The livestock feed sorting assembly of any one of claims 1 to 4 further comprising a fan that moves air through the rotating drum (6).

12. The livestock feed sorting assembly of any one of claims 1 to 4 wherein the rotating drum (6) includes internal fins.

13. A method of preparing a livestock feed ration, the method comprising steps of:
(a) providing a silage material to the livestock feed sorting assembly of any one of claims 1 to 4, thereby separating the silage material into fines and retentate,
(b) combining the fines into a ration for lactating cows, and
(c) combining the retentate with concentrate to produce a dry cow feed or a young stock feed.

14. The method of claim 13 wherein step (b) comprises combining the fines with one or more of corn silage, protein, corn, alfalfa, vitamins, minerals, and whey permeate.

15. The method of claim 13 wherein step (c) comprises combining the retentate with one or more of corn silage, protein canola, alfalfa, whey permeate and vitamins and minerals.

## Patentansprüche

1. Viehfuttersortieranordnung (2), umfassend:
(a) einen Trichter (4), der einen Innenbereich umfasst, der sich nach unten zu einem Trog (10) verjüngt, wobei der Innenbereich enthält
eine oder mehrere rotierende Stangen (28) und
eine Förderschnecke (12), die innerhalb des Trogs (10) positioniert ist, wobei die Förderschnecke (12) ein erstes Ende (24) und ein zweites, freies Ende (26) aufweist, und
(b) eine rotierende Trommel (6), die ein Sieb in zylindrischer Form umfasst, wobei die rotierende Trommel (6) ein Einlassende und ein Retentatende (50) aufweist,
wobei sich die Förderschnecke (12) in einem Winkel nach oben von dem Trichter (4) zu der rotierenden Trommel (6) erstreckt,
wobei die rotierenden Stangen (28) und die Förderschnecke (12) zusammenwirken, um ein Silagematerial mit kontrollierter Geschwindigkeit zu dem Einlassende der rotierenden Trommel (6) zu transportieren, und
wobei das Sieb der rotierenden Trommel (6) das Silagematerial in Feinanteile und Retentat trennt.

2. Viehfuttersortieranordnung nach Anspruch 1, wobei sich die Förderschnecke (12) von dem ersten Ende (24) innerhalb des Trogs (10) in einem Winkel nach oben zu einer Stelle innerhalb des Einlassendes der rotierenden Trommel (6) erstreckt.

3. Viehfuttersortieranordnung (2), umfassend:
(a) einen Trichter (4), der einen Innenbereich umfasst, der sich nach unten zu einem Trog (10) verjüngt, wobei der Innenbereich enthält
eine oder mehrere rotierende Stangen (28, 84) und
einen Förderer (60, 62), die innerhalb des Trogs (10) positioniert ist,
wobei der Förderer (60, 62) ein erstes Ende und ein zweites Ende aufweist, und
(b) eine rotierende Trommel (6), die ein Sieb in zylindrischer Form umfasst, wobei die rotierende Trommel (6) ein Einlassende und ein Retentatende (50) aufweist,
wobei sich der Förderer (60, 62) in einem Winkel nach oben von dem Trichter (4) zu der rotierenden Trommel (6) erstreckt,
wobei die rotierenden Stangen (28) und der Förderer (60, 62) zusammenwirken, um ein Silagematerial mit kontrollierter Geschwindigkeit zu dem Einlassende der rotierenden Trommel (6) zu transportieren, und
wobei das Sieb der rotierenden Trommel (6) das Silagematerial in Feinanteile und Retentat trennt.

4. Viehfuttersortieranordnung nach Anspruch 3, wobei sich der Förderer (60, 62) von dem ersten Ende innerhalb des Trogs (10) in einem Winkel nach oben zu einer Stelle innerhalb des Einlassendes der rotierenden Trommel (6) erstreckt.

5. Viehfuttersortieranordnung nach einem der Ansprüche 1 bis 4, wobei der Trichter (4) mit einem festen, einstellbaren Neigungswinkel versehen ist.

6. Viehfuttersortieranordnung nach einem der Ansprüche 1 bis 4, wobei die eine oder mehreren rotierenden Stangen (28, 84) eine Fläche bzw. Oberfläche umfassen, und wobei Stifte von der Oberfläche vorstehen,
wobei der Trichter (4) optional zwei rotierende Stangen (28, 84) umfasst.

7. Viehfuttersortieranordnung nach einem der Ansprüche 1 bis 4, wobei die rotierende Trommel (6) einen konstanten Durchmesser entlang ihrer Achse aufweist.

8. Viehfuttersortieranordnung nach Anspruch 1 oder 2, wobei das Sieb einheitliche Öffnungsgrößen bzw. Maschenweiten umfasst,
wobei das Sieb optional eine Öffnungsgröße bzw. Maschenweite in einem Bereich von 1,27 cm bis 2,54 cm (d. h. 0,5 Zoll bis 1 Zoll) aufweist.

9. Viehfuttersortieranordnung nach einem der Ansprüche 1 bis 4, wobei die Trommel (6) von dem Einlassende in einem festen, einstellbaren Winkel nach unten angesetzt ist.

10. Viehfuttersortieranordnung nach einem der Ansprüche 1 bis 4, umfassend eine mobile Einheit, die an einem Anhänger (82) bereitgestellt ist.

11. Viehfuttersortieranordnung nach einem der Ansprüche 1 bis 4, ferner umfassend einen Ventilator, der Luft durch die rotierende Trommel (6) bewegt.

12. Viehfuttersortieranordnung nach einem der Ansprüche 1 bis 4, wobei die rotierende Trommel (6) Innenlamellen enthält.

13. Verfahren zum Zubereiten einer Viehfutterration, wobei das Verfahren die Schritte umfasst:
(a) Bereitstellen eines Silagematerials an die Viehfuttersortieranordnung nach einem der Ansprüche 1 bis 4, wodurch das Silagematerial in Feinanteile und Retentat getrennt wird,
(b) Kombinieren der Feinanteile zu einer Ration für laktierende Kühe und
(c) Kombinieren des Retentats mit Konzentrat bzw. Kraftfutter zur Herstellung eines Trockensteherfutters oder eines Jungtierfutters.

14. Verfahren nach Anspruch 13, wobei Schritt (b) ein Kombinieren der Feinanteile mit einem oder mehreren von Maissilage, Protein, Mais, Luzerne, Vitaminen, Mineralstoffen und Molkenpermeat umfasst.

15. Verfahren nach Anspruch 13, wobei Schritt (c) ein Kombinieren des Retentats mit einem oder mehreren von Maissilage, Rapsprotein, Luzerne, Molkenpermeat und Vitaminen und Mineralstoffen umfasst.

## Revendications

1. Ensemble de triage de produits alimentaires pour bétail (2) comprenant :
(a) une trémie (4) comprenant une zone intérieure qui s'effile vers le bas jusqu'à une auge (10), la zone intérieure contenant
une ou plusieurs tiges rotatives (28), et
une mangeoire (12) positionnée au sein de l'auge (10), la mangeoire (12) ayant une première extrémité (24) et une seconde extrémité libre (26), et
(b) un tambour rotatif (6) comprenant un crible sous forme cylindrique, le tambour rotatif (6) ayant une extrémité d'admission et une extrémité de rétentat (50),
dans lequel la mangeoire (12) s'étend à un angle vers le haut de la trémie (4) vers le tambour rotatif (6),
dans lequel les tiges rotatives (28) et la mangeoire (12) coopèrent pour transporter un matériau d'ensilage à un débit contrôlé vers l'extrémité d'admission du tambour rotatif (6), et
dans lequel le crible du tambour rotatif (6) sépare le matériau d'ensilage en fines et rétentat.

2. Ensemble de triage de produits alimentaires pour bétail selon la revendication 1, dans lequel la mangeoire (12) s'étend de la première extrémité (24) au sein de l'auge (10) à un angle vers le haut à un emplacement au sein de l'extrémité d'admission du tambour rotatif (6).

3. Ensemble de triage de produits alimentaires pour bétail (2) comprenant :
(a) une trémie (4) comprenant une zone intérieure qui s'effile vers le bas jusqu'à une auge (10), la zone intérieure contenant
une ou plusieurs tiges rotatives (28, 84), et
un convoyeur (60, 62) positionné au sein de l'auge (10), le convoyeur (60, 62) (12) ayant une première extrémité et une seconde extrémité, et
(b) un tambour rotatif (6) comprenant un crible sous forme cylindrique, le tambour rotatif (6) ayant une extrémité d'admission et une extrémité de rétentat (50),
dans lequel le convoyeur (60, 62) s'étend à un angle vers le haut de la trémie (4) vers le tambour rotatif (6),
dans lequel les tiges rotatives (28, 84) et le convoyeur (60, 62) coopèrent pour transporter un matériau d'ensilage à un débit contrôlé vers l'extrémité d'admission du tambour rotatif (6), et
dans lequel le crible du tambour rotatif (6) sépare le matériau d'ensilage en fines et rétentat.

4. Ensemble de triage de produits alimentaires pour bétail selon la revendication 3, dans lequel le convoyeur (60, 62) s'étend de la première extrémité au sein de l'auge (10) à un angle vers le haut à un emplacement au sein de l'extrémité d'admission du tambour rotatif (6).

5. Ensemble de triage de produits alimentaires pour bétail selon l'une quelconque des revendications 1 à 4, dans lequel la trémie (4) est pourvue d'un angle d'inclinaison fixe ajustable.

6. Ensemble de triage de produits alimentaires pour bétail selon l'une quelconque des revendications 1 à 4, dans lequel la ou les tiges rotatives (28, 84) comprennent une surface, et dans lequel des goujons font saillie de la surface, dans lequel, en option, la trémie (4) comprend deux tiges rotatives (28, 84).

7. Ensemble de triage de produits alimentaires pour bétail selon l'une quelconque des revendications 1 à 4, dans lequel le tambour rotatif (6) a un diamètre constant le long de son axe.

8. Ensemble de triage de produits alimentaires pour bétail selon la revendication 1 ou la revendication 2, dans lequel le crible comprend des tailles d'ouverture uniformes,
dans lequel, en option, le crible a une taille d'ouverture dans une plage de 1,27 cm à 2,54 cm (c'est-à-dire, 0,5 pouce à 1 pouce).

9. Ensemble de triage de produits alimentaires pour bétail selon l'une quelconque des revendications 1 à 4, dans lequel le tambour (6) est incliné à un angle vers le bas fixe ajustable de l'extrémité d'admission.

10. Ensemble de triage de produits alimentaires pour bétail selon l'une quelconque des revendications 1 à 4, comprenant une unité mobile qui est prévue sur une remorque (82).

11. Ensemble de triage de produits alimentaires pour bétail selon l'une quelconque des revendications 1 à 4, comprenant en outre un ventilateur qui déplace de l'air à travers le tambour rotatif (6).

12. Ensemble de triage de produits alimentaires pour bétail selon l'une quelconque des revendications 1 à 4, dans lequel le tambour rotatif (6) inclut des ailettes internes.

13. Procédé de préparation d'une ration de produits alimentaires pour bétail, le procédé comprenant les étapes consistant à :
(a) fournir un matériau d'ensilage à l'ensemble de triage de produits alimentaires pour bétail selon l'une quelconque des revendications 1 à 4, séparant de ce fait le matériau d'ensilage en fines et rétentat,
(b) combiner les fines en une ration pour vaches allaitantes, et
(c) combiner le rétentat avec du concentré pour produire des produits alimentaires secs pour vaches ou des produits alimentaires pour jeune bétail.

14. Procédé selon la revendication 13, dans lequel l'étape (b) comprend combiner les fines avec un ou plusieurs éléments parmi de l'ensilage de maïs, de la protéine, du maïs, de la luzerne, des vitamines, des minéraux et du perméat de lactosérum.

15. Procédé selon la revendication 13, dans lequel l'étape (c) comprend combiner le rétentat avec un ou plusieurs éléments parmi de l'ensilage de maïs, du canola protéique, de la luzerne, du perméat de lactosérum et des vitamines et des minéraux.
